# EUROPÄISCHE PATENTSCHRIFT

(11) **EP 2 997 333 B1**
(45) Veröffentlichungstag und Bekanntmachung des Hinweises auf die Patenterteilung: **24.04.2019**
(21) Anmeldenummer: 14721390.4
(22) Anmeldetag: 05.05.2014
(51) Int. Cl.: G01C 21/36

(54) **VERFAHREN ZUM BETREIBEN EINES NAVIGATIONSSYSTEMS, NAVIGATIONSSYSTEM UND KRAFTFAHRZEUG**
METHOD FOR OPERATING A NAVIGATION SYSTEM, NAVIGATION SYSTEM AND MOTOR VEHICLE
PROCÉDÉ PERMETTANT DE FAIRE FONCTIONNER UN SYSTÈME DE NAVIGATION, SYSTÈME DE NAVIGATION, ET VÉHICULE AUTOMOBILE

(30) Priorität: 17.05.2013 DE 102013209168
(43) Veröffentlichungstag der Anmeldung: 23.03.2016
(73) Patentinhaber: Bayerische Motoren Werke Aktiengesellschaft, 80809 München (DE)
(72) Erfinder: GUSENBAUER, Dominik, 80807 München (DE); KÖRTGE, Harald, 80634 München (DE)
(86) Internationale Anmeldenummer: PCT/EP2014/059105
(87) Internationale Veröffentlichungsnummer: WO 2014/184031

(56) Entgegenhaltungen:
- EP-A1- 2 241 983
- DE-A1-102007 003 115

## Beschreibung

Die Erfindung betrifft ein Verfahren zum Durchführen einer Suche nach möglichen Zielen mittels eines Navigationssystems eines Kraftfahrzeugs. Die Erfindung betrifft außerdem ein Navigationssystem sowie ein Kraftfahrzeug mit einem Navigationssystem, wobei das Navigationssystem zum Durchführen eines solchen Verfahrens ausgebildet ist.

Navigationssysteme für Kraftfahrzeuge sind bereits Stand der Technik und dienen zur Ausgabe von Navigationshinweisen, welche den Fahrer beim Führen des Kraftfahrzeugs zu einem bestimmten Zielort unterstützen. Vorliegend richtet sich das Interesse auf die Durchführung einer Suche nach möglichen Navigationszielen in einer Navigationsdatenbank eines Navigationssystems. In diesem Zusammenhang ist es beispielsweise bereits bekannt, dass das gewünschte Navigationsziel über eine hierarchische Zieleingabe gefunden werden kann. Hierbei muss der Benutzer zunächst das Land sowie die gewünschte Stadt oder aber die Postleitzahl eingeben, um dann konkreter die gewünschte Straße und die Hausnummer definieren zu können. Des Weiteren sind auch Navigationssysteme bekannt, bei denen mittels einer sogenannten Volltextsuche das Auffinden von Navigationszielen anhand einer möglichst eindeutigen Zeichenkette möglich ist. Eine solche Volltextsuche ist besonders benutzerfreundlich und ermöglicht das Auffinden des gewünschten Ziels mit lediglich einer einzigen Zieleingabe.

Aus der Druckschrift DE 10 2006 057 921 A1 ist ein Navigationssystem bekannt, bei welchem ausgehend von einer vom Benutzer eingegebenen Buchstabenkombination eine Liste von möglichen Navigationszielen vorgeschlagen wird. Nach jeder Eingabe eines Zeichens oder einer Zeichengruppe wird bereits eine Suche in einer Datenbank auf Grundlage der von dem Benutzer bislang eingegebenen Teileingabe durchgeführt. Eine für diese Suche bereitgestellte Sucheinheit kann eine Freitextsuche oder eine Volltextsuche in der Datenbank auf Grundlage eines Volltextindexes durchführen. Die Suche kann auf Navigationsziele beschränkt werden, die sich in einem vorbestimmten Radius um die aktuelle Position des Navigationsgeräts befinden.

Das Dokument DE 10 2010 005 502 A1 beschreibt ein Verfahren zum Durchführen einer Suche in einem Infotainmentsystem eines Kraftfahrzeugs, wobei das Infotainmentsystem eine Mehrzahl von Funktionalitäten aufweist, die durch Betätigen eines der jeweiligen Funktionalität zugeordneten Festfunktions-Bedienelements aufgerufen werden können. Aufgrund einer alphanumerischen Eingabe eines Benutzers wird nach Ordnern, Dateien oder Dateiinhalten in einem vorbestimmten Suchfeld gesucht, und die Suchergebnisse werden zu diesem vorbestimmten Suchfeld auf einer Anzeigeeinrichtung angezeigt. Wird dann die Betätigung eines Festfunktions-Bedienelements erfasst, so erfolgt eine Änderung des Suchfelds aufgrund der Betätigung, und es werden neue Suchergebnisse zu diesem neuen Suchfeld angezeigt.

Ein Verfahren zur Durchführung einer Volltextsuche in einer Datenbank eines Navigationssystems ist des Weiteren aus der EP 2 354 984 A1 bekannt. Um die Volltextsuche aufwandsärmer gestalten zu können, werden mehrere Indextabellen verwendet, die über eine übergeordnete Tabelle miteinander verknüpft sind. Ein einzelner Datenbankeintrag kann hier neben den eigentlichen, eindeutigen Objektbezeichnungen für Navigationsziele auch Kategoriedaten beinhalten, die beispielsweise angeben, dass ein bestimmtes Navigationsziel ein Restaurant ist.

An den bekannten Navigationssystemen ist als nachteilig der Umstand anzusehen, dass die Datenbanken der Navigationssysteme relativ komplex aufgebaut und somit verhältnismäßig groß sind. Dies bewirkt wiederum, dass das Durchführen der Suche insgesamt recht lange dauern kann, weil jeweils die gesamte Datenbank in aufwendiger Weise nach dem gewünschten Ziel durchsucht werden muss. Außerdem wird für die Bearbeitung der großen Navigationsdatenbank ein entsprechend großer Arbeitsspeicher benötigt, in welchen die Datenbank während der Suche geladen werden muss. Solche Arbeitsspeicher stehen jedoch insbesondere bei Kraftfahrzeugen nur bedingt zur Verfügung.

Die EP 2 241 983 A1 offenbart ein Verfahren, in dem eine Datenbank mit einer auf Regionen bezogenen Index-Datenstruktur nach zwei Eingabesuchmustern durchsucht wird. Daraus wird als Schnittmenge eine Kandidatenmenge von Regionen bestimmt, die dann ausführlich nach der Eingabe entsprechenden Objektion durchsucht wird.

Aus der DE 10 2007 003 115 A1 ist eine Datenbankstruktur mit einer ersten Datenbank bekannt, in der Datenbankeinträge gespeichert sind, die geographische Regionen angeben, und einer zweiten Datenbank, in der Datenbankeinträge gespeichert sind, die Straßennamen und/oder Sonderziele angeben. Jeder Eintrag einer Datenbank enthält Verweise auf entsprechende Einträge der jeweils anderen Datenbank. Die Datenbank für jede Kategorie wird jeweils nach einem entsprechend eingegebenen Deskriptor durchsucht. Auf Grundlage der Verweise werden Eintragspaare aus den jeweiligen Ergebnislisten bestimmt.

Es ist Aufgabe der Erfindung, einen Weg aufzuzeigen, wie bei einem Verfahren der eingangs genannten Gattung der Rechen- und/oder Datenaufwand während der Suche nach den möglichen Zielen im Vergleich zum Stand der Technik reduziert werden kann.

Diese Aufgabe wird erfindungsgemäß durch ein Verfahren, durch ein Navigationssystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben eines Navigationssystems eines Kraftfahrzeugs für eine Suche nach möglichen Zielen. Das Navigationssystem beinhaltet eine erste sowie eine zweite Datenbank. In der ersten Datenbank sind Datenbankeinträge gespeichert, die geografische Regionen bzw. Gebiete angeben. Demgegenüber sind in der zweiten Datenbank Datenbankeinträge gespeichert, weiche Straßennamen und/oder Sonderziele angeben, wobei in der zweiten Datenbank zusätzlich zu jedem Straßennamen und/oder Sonderziel ein Verweis auf zumindest eine geografische Region aus der ersten Datenbank angegeben ist. Mittels einer Recheneinrichtung des Navigationssystems wird eine Sucheingabe empfangen, die ein Benutzer bei einer Eingabeeinrichtung vornimmt. Dann wird mittels der Recheneinrichtung die erste Datenbank in Abhängigkeit von der Sucheingabe nach passenden Datenbankeinträgen durchsucht und hierbei eine erste Ergebnisliste von passenden Datenbankeinträgen bereitgestellt. Unabhängig davon wird in Abhängigkeit von derselben Sucheingabe auch die zweite Datenbank nach passenden Datenbankeinträgen durchsucht, und hierbei wird eine zweite Ergebnisliste von passenden Datenbankeinträgen bereitgestellt. Dann erfolgt eine Zuordnung der Datenbankeinträge aus der zweiten Ergebnisliste zu den Datenbankeinträgen aus der ersten Ergebnisliste anhand der Verweise: Die Datenbankeinträge aus der zweiten Ergebnisliste werden jeweils zu demjenigen Datenbankeintrag aus der ersten Ergebnisliste zugeordnet, auf den der jeweilige Verweis zeigt. Es werden somit Eintragspaare bestimmt, die jeweils einen Datenbankeintrag aus der ersten Ergebnisliste und einen Datenbankeintrag aus der zweiten Ergebnisliste beinhalten. Dann wird auf einer Anzeigeeinrichtung eine die Eintragspaare als die möglichen Ziele umfassende Auswahlliste angezeigt, so dass der Benutzer eines der angezeigten Ziele auswählen kann. Wird ein bestimmtes Ziel ausgewählt, berechnet die Recheneinrichtung eine entsprechende Navigationsroute, über welche das Kraftfahrzeug zu dem ausgewählten Ziel geführt werden kann.

Erfindungsgemäß wird somit vorgeschlagen, das Navigationssystem so auszugestalten, dass die Daten in zwei verschiedenen Datenbanken geordnet sind, und zwar derart, dass in der ersten Datenbank lediglich geografische Regionen in Form einer Liste abgelegt sind, während in der zweiten Datenbank die eindeutigen, konkreten Straßennamen und/oder Sonderziele jeweils mit einem Verweis auf zumindest eine geografische Region abgelegt sind, zu welcher die jeweilige Straße beziehungsweise das jeweilige Sonderziel geografisch gehört. Durch eine solche Datenstruktur wird insgesamt ein Suchindex geschaffen, bei welchem die jeweilige Datenbank mittels einer linearen Suche durchsucht werden kann, so dass die Suche nach den möglichen Zielen mit einer Laufzeitkomplexität von O(n) durchgeführt werden kann. Einerseits ist somit der zeitliche Aufwand im Vergleich zu anderen Datenbankstrukturen deutlich reduziert; andererseits ist auch die Größe der beiden Datenbanken relativ gering. Entsprechend wird in dem Kraftfahrzeug kein großer Arbeitsspeicher benötigt.

Mittels der Recheneinrichtung wird also abhängig von der Sucheingabe einerseits eine erste Ergebnisliste mit Datenbankeinträgen aus der ersten Datenbank sowie andererseits eine zweite Ergebnisliste mit Datenbankeinträgen aus der zweiten Datenbank generiert. Dann erfolgt ein "Matching" der gefundenen Straßennamen und/oder Sonderziele zu den gefundenen geografischen Regionen anhand der jeweiligen Verweise. Wird dabei festgestellt, dass der Verweis einer gefundenen Straße und/oder eines Sonderziels auf eine Region zeigt, welche nicht in der Ergebnisliste enthalten ist, so können diese Datenbankeinträge verworfen werden.

Das erfindungsgemäße Verfahren kann anhand des folgenden Beispiels veranschaulicht werden: Von dem Benutzer werden als Sucheingabe die beiden Begriffe "München Hanau" eingegeben. Die Recheneinrichtung durchsucht nun die erste Datenbank und findet als geografische Regionen sowohl die Stadt "München" als auch die Stadt "Hanau". Die erste Ergebnisliste beinhaltet somit die beiden Städte: "München" sowie "Hanau". Die Recheneinrichtung durchsucht auch die zweite Datenbank und findet dort die "Münchener Straße" sowie die "Hanauer Straße". Die zweite Ergebnisliste beinhaltet somit die beiden Straßen: die "Münchener Straße" sowie die "Hanauer Straße". Bei einer Zuordnung stellt die Recheneinrichtung fest, dass bei der "Hanauer Straße" ein Verweis auf die Stadt "München" gegeben ist, während es bei der "Münchener Straße" keinen solchen Verweis auf die Stadt "Hanau" gibt. Ein einziges mögliches Eintragspaar aus diesen beiden Ergebnislisten ist somit: "Hanauer Straße in München". Dieses Ziel wird dann auf der Anzeigeeinrichtung angezeigt.

Die Datenbankeinträge der zweiten Datenbank können zusätzlich jeweils eine Referenz in eine Navigationskarte beinhalten, um dann einzelne Ziele letztendlich geographisch auflösen zu können. Alternativ können die Datenbankeinträge der zweiten Datenbank auch aus der Navigationskarte referenziert werden, sofern das Datenformat der Navigationskarte dies zulässt bzw. vorsieht.

In einer Ausführungsform ist vorgesehen, dass in der zweiten Datenbank die Datenbankeinträge - das heißt die Straßennamen und/oder die Sonderziele - alphabetisch geordnet abgelegt sind. Bei einer linearen Suche kann somit die für die Suche benötigte Zeit auf ein Minimum reduziert werden.

Es erweist sich als vorteilhaft, wenn die in der ersten Datenbank angegebenen geografischen Regionen hierarchisch in zumindest zwei Hierarchiestufen geordnet sind, so dass zu jeder Region einer bestimmten Hierarchiestufe eine Mehrzahl von zu dieser Region geografisch gehörigen Regionen einer dazu untergeordneten Hierarchiestufe zugeordnet sind. Die hierarchische Struktur kann beispielsweise entsprechend einer staatlichen Verwaltungsgliederung aufgebaut sein, welche die in den unterschiedlichen Staaten jeweils bestehenden vertikalen administrativen Strukturen bezeichnet. Es können dabei zum Beispiel insgesamt zehn verschiedene Hierarchiestufen vorgesehen sein. Eine erste Hierarchiestufe - eine Hauptstufe - kann beispielsweise die Staaten beinhalten, also beispielsweise "Deutschland", "Frankreich", "Österreich" und dergleichen. Die Staaten wiederum können in Bundesländer unterteilt sein, die dann eine zweite Hierarchiestufe bilden. Die Bundesländer können dann die jeweiligen weiteren Verwaltungseinheiten als dritte Hierarchiestufe beinhalten, und so weiter.

Hinsichtlich der benötigten Suchzeit hat es sich als vorteilhaft erwiesen, wenn die in der ersten Datenbank angegebenen geografischen Regionen entsprechend einer Baumstruktur in einer solchen Reihenfolge abgelegt sind, dass unmittelbar nach einer bestimmten Region alle zu dieser Region gehörigen untergeordneten Regionen folgen. Auf diese Art und Weise können die zu einer bestimmten Region untergeordneten Regionen besonders schnell in der Datenbank aufgefunden werden. Die Regionen innerhalb derselben Hierarchiestufe sind dabei vorzugsweise alphabetisch geordnet.

Wird abhängig von der Sucheingabe des Nutzers eine Region aus einer bestimmten Hierarchiestufe gefunden, so werden in die erste Ergebnisliste vorzugsweise zusätzlich noch alle dieser Region untergeordneten Regionen aufgenommen. Wird anhand der Sucheingabe beispielsweise die Region "Bad Tölz" gefunden, so werden in die erste Ergebnisliste auch die untergeordneten Regionen "Bad Tölz Mitte", "Bad Tölz Süd" sowie "Bad Tölz Ost" aufgenommen. Auf diese Art und Weise wird eine sehr präzise und einfache Zuordnung der gefundenen Straßennamen und/oder Sonderziele zu der entsprechenden Region ermöglicht. Beispielsweise kann dabei auch vorgesehen sein, dass die genannten Verweise, die in der zweiten Datenbank angegeben sind, auf die kleinste Region - das heißt auf die Region aus der letzten Hierarchiestufe - zeigen, in welcher sich die jeweilige Straße und/oder das jeweilige Sonderziel befindet.

Ergänzend oder alternativ kann auch vorgesehen sein, dass, falls abhängig von der Sucheingabe eine bestimmte Region sowie eine dazu untergeordnete Region gefunden werden, in die erste Ergebnisliste ausschließlich die untergeordnete Region aufgenommen wird. Somit wird die Rechenzeit bei der Suche weiterhin reduziert. Wird beispielsweise die Sucheingabe "Bad Tölz Mitte" empfangen, so wird in die erste Ergebnisliste ausschließlich die Region "Bad Tölz Mitte" aufgenommen, nicht jedoch die übergeordnete Region "Bad Tölz".

In einer bevorzugten Ausführungsform sind die erste und/oder die zweite Datenbank komprimiert, insbesondere delta-komprimiert, in einem Datenspeicher abgelegt. Somit wird der benötigte Speicherplatz auf ein Minimum reduziert. Diese Ausführungsform erweist sich insbesondere in Bezug auf die zweite Datenbank als besonders vorteilhaft, in welcher die Straßennamen und/oder die Sonderziele abgelegt sind. Die zweite Datenbank beinhaltet nämlich deutlich mehr Datenbankeinträge als die erste Datenbank, so dass durch die Komprimierung der zweiten Datenbank insgesamt viel Speicherplatz gespart werden kann. Eine Delta-Komprimierung kann beispielsweise so aussehen, dass bei jedem Datenbankeintrag zunächst eine Zahl definiert wird, welche angibt, wie viele Anfangsbuchstaben aus dem unmittelbar vorherigen Datenbankeintrag übernommen werden sollen. Werden beispielsweise die folgenden beiden Datenbankeinträge "Aachener Straße" sowie "Aachener Weg" komprimiert abgelegt, so kann der zweite Datenbankeintrag folgendermaßen gespeichert werden: "9 Weg". Dies bedeutet, dass die ersten neun Buchstaben des zweiten Datenbankeintrags von dem vorherigen Eintrag übernommen werden.

Es kann vorgesehen sein, dass die erste und/oder die zweite Datenbank in eine Mehrzahl von Teildatenbanken unterteilt ist, in denen jeweils eine Untermenge der Datenbankeinträge abgelegt ist. Jede Teildatenbank kann dabei jeweils in Form einer separaten Datei bereitgestellt sein, weiche in einem Datenspeicher abgelegt ist. Die Unterteilung der ersten und/oder zweiten Datenbank in mehrere Teildatenbanken hat den Vorteil, dass die Recheneinrichtung die einzelnen Teildatenbanken bei der Durchführung der Suche dynamisch nachladen kann, so dass sich insgesamt eine verbesserte Speicherauslastung ergibt. Es wird somit auch ein kleinerer Arbeitsspeicher benötigt, und die Suchzeit wird weiterhin reduziert. Das Vorsehen mehrerer Teildatenbanken hat auch Vorteile hinsichtlich der Aktualisierung beziehungsweise "Updates" der Datenbank. Es können dabei lediglich partielle Updates vorgenommen werden, so dass nicht die gesamte Datenbank aktualisiert zu werden braucht. Die Unterteilung in mehrere Teildatenbanken kann beispielsweise für größere geografische Gebiete vorgenommen werden, wie beispielsweise für die USA.

Ist eine der Datenbanken in mehrere Teildatenbanken unterteilt, so kann die Recheneinrichtung während der Suche nach den möglichen Zielen zumindest eine der Teildatenbanken aus einem nicht-flüchtigen Speicher, in welchem die erste und die zweite Datenbank abgelegt sind, in einen flüchtigen Arbeitsspeicher laden bzw. kopieren und dann nach den passenden Datenbankeinträgen in der Teildatenbank des Arbeitsspeichers suchen. Beispielsweise kann eine Teildatenbank nach der anderen oder auch zeitlich parallel nachgeladen und durchsucht werden. Es brauchen jedoch bei einer bestimmten Sucheingabe nicht alle Teildatenbanken durchsucht zu werden, sondern lediglich diejenigen, die für die empfangene Sucheingabe als plausibel beurteilt werden. Diese Ausführungsform sorgt im Allgemeinen für eine weitere Beschleunigung der Suche.

Wie bereits ausgeführt, kann das Durchsuchen der ersten und/oder der zweiten Datenbank mittels einer linearen Suche, insbesondere mit einer sogenannten Skip-Funktion, erfolgen. Bei einer Skip-Funktion können einzelne Einträge der Liste übersprungen werden. Auch dies reduziert die Suchzeit.

Vorzugsweise erfolgt die Generierung der Auswahlliste in Echtzeit: In einer Ausführungsform ist vorgesehen, dass bereits während der Sucheingabe, wenn in einem Eingabefeld von dem Benutzer die Sucheingabe fortlaufend ediert beziehungsweise vervollständigt wird, wiederholt jeweils eine bislang vorgenommene Teileingabe durch die Recheneinrichtung empfangen und die Auswahlliste abhängig von der jeweils aktuellen Teileingabe fortlaufend aktualisiert wird. Insbesondere kann die Auswahlliste nach jedem neuen Zeichen oder jedem neuen Suchbegriff der Sucheingabe in Abhängigkeit von der jeweils aktuellen Teileingabe aktualisiert werden. Der Benutzer bekommt somit die möglichen Ziele in der Auswahlliste angezeigt, ohne dass er die Sucheingabe vervollständigen oder bestätigen muss. Werden die gefundenen möglichen Ziele entsprechend priorisiert, so kann es sogar möglich sein, dass das gewünschte Ziel bereits nach der Eingabe von wenigen Zeichen angezeigt wird, so dass der Aufwand für den Benutzer bei der Suche nach seinem gewünschten Ziel minimal ist.

Es ist bevorzugt, wenn den möglichen Zielen, welche durch die Recheneinrichtung aufgefunden und in der Auswahlliste angezeigt werden, jeweils ein Prioritätswert zugeordnet wird. Dann kann die Reihenfolge der möglichen Ziele in der Auswahlliste in Abhängigkeit von den Prioritätswerten bestimmt werden. Auf diesem Wege gelingt es, diejenigen möglichen Ziele an vorderster Stelle in der Auswahlliste anzuzeigen, welche gegenwärtig plausibler als andere Ziele erscheinen. Eine solche Vorgehensweise ist besonders benutzerfreundlich, weil der Benutzer zuerst die plausiblen Ziele angezeigt bekommt und sein gewünschtes Ziel entsprechend schnell auffinden kann.

Hinsichtlich der Priorisierung der gefundenen Ziele hat es sich weiterhin als vorteilhaft erwiesen, wenn die genannten Prioritätswerte in Abhängigkeit von zumindest einem der folgenden Parameter bestimmt werden:
Die Prioritätswerte können in einer Ausführungsform in Abhängigkeit von einer Häufigkeit bestimmt werden, mit welcher das jeweilige Ziel bislang zur Berechnung einer Navigationsroute durch den Benutzer ausgewählt wurde. Wurde ein bestimmtes Ziel häufiger als andere Ziele ausgewählt, so kann dieses Ziel weiter vorne in der Auswahlliste als die anderen Ziele angezeigt werden, so dass der Benutzer dieses beliebte Ziel ohne viel Aufwand auffinden beziehungsweise schnell erfassen kann.

Ergänzend oder alternativ können die Prioritätswerte in Abhängigkeit von einer aktuellen Position des Kraftfahrzeugs bestimmt werden. Auch die aktuelle geografische Position des Kraftfahrzeugs stellt einen Parameter dar, welcher eine gewisse Rolle bei der Beurteilung der Plausibilität der gefundenen Ziele spielt.

Die Prioritätswerte können beispielsweise in Abhängigkeit von einer Entfernung des jeweiligen Ziels von der aktuellen geografischen Position des Kraftfahrzeugs bestimmt werden. Beispielsweise können diejenigen Ziele in der Auswahlliste höher als die anderen Ziele angezeigt werden, welche der aktuellen Position des Kraftfahrzeugs näher liegen. Diese Ausführungsform macht sich die Tatsche zunutze, dass die Ziele, die sich in einer relativ großen Entfernung von dem Kraftfahrzeug befinden, insgesamt seltener als die näheren Ziele ausgewählt werden.

Weiterhin ergänzend oder alternativ kann vorgesehen sein, dass die Prioritätswerte in Abhängigkeit von einem Übereinstimmungsgrad des jeweiligen Ziels mit der Sucheingabe des Benutzers bestimmt werden. Dabei kann die Beziehung gelten, dass je größer der Übereinstimmungsgrad ist, desto höher die jeweiligen Ziele in der Auswahlliste angezeigt werden.

Die Prioritätswerte können ergänzend oder alternativ auch in Abhängigkeit von einem Typ, insbesondere einem Verwaltungstyp und/oder der Kategorie (z.B. POl), des jeweiligen Ziels bestimmt werden. So können beispielsweise Städte oder kleinere Regionen anders als Straßen oder Sonderziele priorisiert werden. Beispielsweise kann dabei gelten, dass je genauer und eindeutiger das Ziel ist, desto höher dieses Ziel in der Auswahlliste angezeigt wird.

Wird als mögliches Ziel eine Stadt gefunden, so kann der Prioritätswert auch abhängig von einer Anwohneranzahl der Stadt bestimmt werden.

Die oben genannten Parameter können bei der Bestimmung der Prioritätswerte beispielsweise mit einer vorgegebenen Gewichtung berücksichtigt werden.

Dem Benutzer kann auch die Möglichkeit bereitgestellt werden, die angezeigten möglichen Ziele einzeln in eine Favoritenliste aufzunehmen. Bei einer nachfolgenden späteren Suche können dann diejenigen Ziele an vorderster Stelle platziert werden, welche in der Favoritenliste enthalten sind.

Beinhaltet die Sucheingabe mehrere Suchbegriffe (sogenannte "Tokens"), welche mit einem Leerzeichen oder mit einem anderen Trennzeichen voneinander getrennt eingegeben werden, so kann die Recheneinrichtung die beiden Datenbanken unabhängig von der Reihenfolge der Eingabe dieser Suchbegriffe durchsuchen. Die Sucheingabe "München Hanauer Straße 46" führt somit insgesamt zu der gleichen Auswahlliste, wie beispielsweise die Sucheingabe "Hanauer Straße 46 München" oder "46 Hanauer Straße München". Es werden bevorzugt auch Straßennamen unterstützt, welche mit einer Zahl beginnen, wie beispielsweise "50th Avenue". Auch diese Straßennamen können an beliebiger Stelle in der Sucheingabe angegeben werden.

Die Recheneinrichtung unterstützt vorzugsweise auch unvollständige und/oder fehlerhafte Sucheingaben. Eine solche Situation kann zum Beispiel dann auftreten, wenn statt "München" der Suchbegriff "Munch" oder aber "München" eingegeben wird. Die Recheneinrichtung kann dabei einen Ähnlichkeitsgrad der eingegebenen Suchbegriffe mit den abgelegten Datenbankeinträgen bestimmen und diesen Ähnlichkeitsgrad mit einer vorgegebenen Schwelle vergleichen. Überschreitet der Ähnlichkeitsgrad diese Schwelle, so wird der gefundene Datenbankeintrag ausgewählt.

Werden mehrere Suchbegriffe eingegeben, so kann die Recheneinrichtung bestimmte Suchbegriffe optional auch zusammenfassen. Beispielsweise kann dies dann vorgenommen werden, wenn bei der Suche die Begriffe "Hanauer Straße" eingegeben werden. Diese beiden Suchbegriffe können zusammengefasst werden, so dass in den Datenbanken nach der "Hanauer Straße" gesucht wird.

Das erfindungsgemäße Verfahren ermöglicht insgesamt eine flexible und vollständige Suche nach möglichen Zielen in einer Laufzeitkomplexität von O(n). Die Suchergebnisse werden anhand unterschiedlicher Parameter bewertet und letztendlich in einer nach Benutzerkontext sortierten Auswahlliste bereitgestellt. Das Verfahren basiert auf einem verbesserten Datenformat für den Suchindex, welcher in zwei unterschiedliche Datenbanken beziehungsweise Tabellen gegliedert wird: einerseits die geografischen Regionen ("Area Hierarchie") sowie andererseits die Straßennamen und/oder Sonderziele ("Straßen/POl Hierarchie"). Die Erstellung der Datenbanken für den Suchindex erfolgt für statische Daten insbesondere in einem Kompilationsschritt bei der Fertigung/Programmierung des Navigationssystems. Für dynamische Änderungen der Ausgangsdaten, wie beispielsweise der vom Benutzer selbst definierten Kontaktdaten, werden Teile des Suchindexes im Betrieb des Kraftfahrzeugs neu kompiliert und entsprechend angepasst. Der entscheidende Vorteil des Verfahrens liegt insbesondere in der Aufbereitung der Datenbanken beziehungsweise in dem Datenformat für den Suchindex. Einerseits wird die erste und/oder die zweite Datenbank hochkomprimiert abgelegt, um möglichst wenig Speicherplatz im Kraftfahrzeug zu belegen; andererseits wird der Suchindex möglichst vollständig für alle relevanten Ziele (Adressen, POls, Kontakte und so weiter) erstellt und für schnelle Abfragen während der Suche optimiert. Durch dieses Datenformat kann insgesamt Speicherplatz gespart werden. So benötigt die größere zweite Datenbank für alle Straßennahmen sowie Sonderziele in Deutschland lediglich ca. 8 MB, während für dieselben Informationen in dem NDS Free Text Search Building Block etwa 300 MB benötigt werden.

Die Erfindung betrifft außerdem ein Kraftfahrzeug, insbesondere einen Personenkraftwagen, mit einem Navigationssystem, welches zum Durchführen eines erfindungsgemäßen Verfahrens ausgebildet ist. Die mit Bezug auf das erfindungsgemäße Verfahren vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alte vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung einen vorderen Bereich eines Innenraums eines Kraftfahrzeugs mit einem Navigationssystem gemäß einer Ausführungsform der Erfindung;
- Fig. 2: ein Blockdiagramm des Navigationssystems;
- Fig. 3: den Aufbau einer ersten Datenbank;
- Fig. 4: den Aufbau einer zweiten Datenbank; und
- Fig. 5: ein Flussdiagramm eines Verfahrens gemäß einer Ausführungsform der Erfindung.

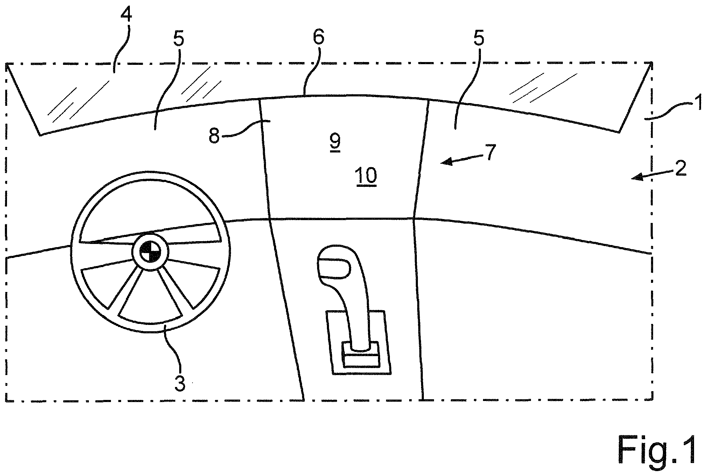

Bezug nehmend auf Fig. 1 beinhaltet ein als Personenkraftwagen ausgebildetes Kraftfahrzeug 1 einen Innenraum 2, dessen Frontbereich in Fig. 1 schematisch dargestellt ist. Auf einer Fahrerseite befindet sich in an sich bekannter Weise ein Lenkrad 3, welches zwischen einer Windschutzscheibe 4 und einem nicht dargestellten Fahrersitz angeordnet ist und zur Lenkung der vorderen Räder des Kraftfahrzeugs 1 dient. Zwischen der Windschutzscheibe 4 einerseits und dem Lenkrad 3 andererseits ist ein Armaturenbrett 5 angeordnet, das sich in Fahrzeugquerrichtung über die gesamte Breite des innenraums 2 erstreckt und zu welchem eine Mittelkonsole 6 gehört. Die Mittelkonsole 6 befindet sich mittig zwischen dem Fahrersitz und dem Beifahrersitz.

In dem Kraftfahrzeug 1 ist ein Infotainmentsystem 7 fest installiert, welches in unterschiedlichen Betriebsmodi betrieben werden kann, wie insbesondere in einem Navigationsmodus, einem Tefefonie-Modus und dergleichen. Das Infotainmentsystem 7 umfasst eine Anzeigeeinrichtung 8 mit einer beispielsweise durch eine berührungssensitive Anzeigefläche 9 gebildeten Eingabeeinrichtung 10. Die Anzeigeeinrichtung 8 ist beispielsweise in Form eines LCD-Displays bereitgestellt, wobei die Erfindung nicht auf eine bestimmte Displayart beschränkt ist und die Anzeigeeinrichtung 8 grundsätzlich beliebig ausgestaltet sein kann, etwa auch in Form eines Head-Up-Displays und/oder in Form eines dreidimensionalen Displays. Die Anzeigeeinrichtung 8 kann beispielsweise in die Mittelkonsole 6 integriert sein, wie dies in Fig. 1 schematisch angedeutet ist. Sie kann aber auch ein frei programmierbares Kombiinstrument sein.

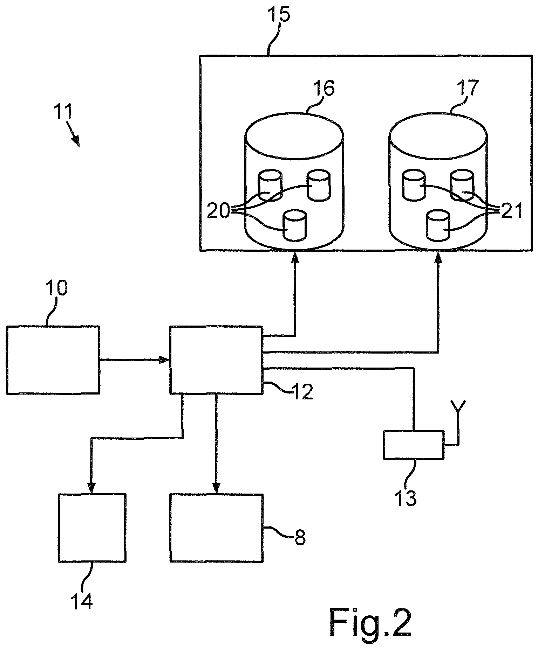

Das Infotainmentsystem 7 beinhaltet also ein Navigationssystem 11, dessen Blockdiagramm in Fig. 2 dargestellt ist. Zum Navigationssystem 11 gehört eine Recheneinrichtung 12, welche beispielsweise als digitaler Signalprozessor ausgebildet ist. Die Recheneinrichtung 12 kann optional eine für das gesamte Infotainmentsystem 7 gemeinsame Recheneinrichtung sein. Die Recheneinrichtung 12 ist mit der Anzeigeeinrichtung 8 gekoppelt und steuert diese an. Außerdem ist die Recheneinrichtung 12 mit der Eingabeeinrichtung 10 verbunden, welche zum Durchführen von Eingaben dient. Wie bereits ausgeführt, kann diese Eingabeeinrichtung 10 durch die berührungssensitive Anzeigefläche 9 gebildet sein. Ergänzend oder alternativ kann die Eingabeeinrichtung 10 auch eine separate Tastatur und/oder einen Steuerknüppel und/oder ein Spracherkennungssystem umfassen.

Die Recheneinrichtung 12 ist des Weiteren mit einem Navigationsempfänger 13 gekoppelt, welcher zum Empfangen von Positionsdaten des Kraftfahrzeugs 1 ausgebildet ist. Als Navigationsempfänger 13 kann beispielsweise ein GPS-Empfänger eingesetzt werden. Optional kann die Recheneinrichtung 12 auch an einen Fahrzeugbus, insbesondere den CAN-Bus, angebunden sein, um zum Beispiel Odometriedaten empfangen zu können.

Wird ein bestimmtes Ziel durch den Benutzer ausgewählt, so kann die Recheneinrichtung 12 eine Navigationsroute berechnen, über welche das Kraftfahrzeug 1 bis zu dem festgelegten Ziel geführt werden kann. Die entsprechenden Navigationshinweise, welche den Fahrer dann zu dem ausgewählten Ziel führen, können einerseits über die Anzeigeeinrichtung 8 und andererseits optional auch mit Hilfe eines Lautsprechers 14 akustisch ausgegeben werden. Bei der Berechnung der Navigationsroute greift die Recheneinrichtung 12 auf eine insgesamt mit 15 bezeichnete Speichereinrichtung zu.

Das Interesse gilt vorliegend der Durchführung einer Suche nach möglichen Zielen. An der Eingabeeinrichtung 10 kann der Benutzer eine Sucheingabe vornehmen, anhand welcher die Recheneinrichtung 12 dann nach möglichen Zielen in der Speichereinrichtung 15 sucht. In der Speichereinrichtung 15 - etwa in einem gemeinsamen Speicher - sind dabei zwei separate Datenbanken abgelegt, nämlich eine erste Datenbank 16 sowie eine zweite Datenbank 17. Zusätzlich ist auch eine Navigationskarte vorgesehen, um die gefundenen Ziele dann geographisch auflösen bzw. in der realen Welt orten zu können.

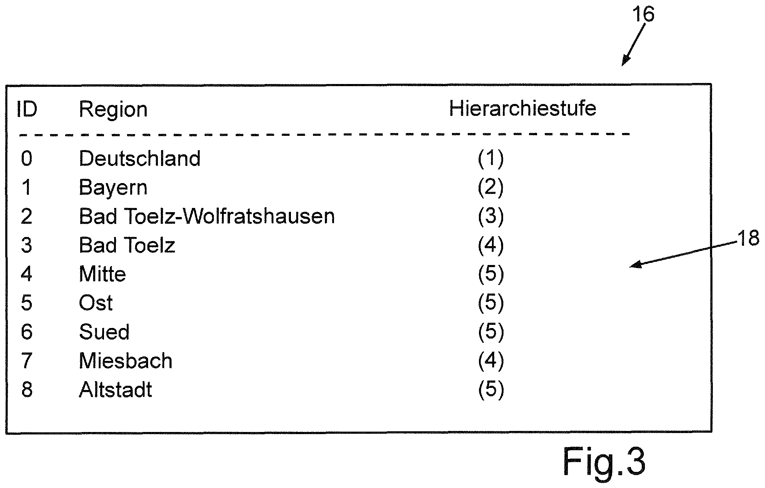

Bezug nehmend nun auf Fig. 3 wird der Aufbau der ersten Datenbank 16 des Suchindexes näher erläutert: Die erste Datenbank 16 ist in Form einer Tabelle bereitgestellt und beinhaltet eine Vielzahl von Datenbankeinträgen 18, welche in der Indextabelle entsprechend geordnet sind. Die Tabelle beinhaltet drei Spalten: Eine erste, mit "ID" bezeichnete Spalte gibt die fortlaufende Nummer des jeweiligen Datenbankeintrags 18 in der Reihenfolge ein. Der Kern der ersten Datenbank 16 ist durch eine zweite Spalte gebildet, in welcher geografische Regionen bzw. Gebiete angegeben sind. Jeder Datenbankeintrag 18 gibt dabei ein geografisches Gebiet an. Die Datenbankeinträge 18 beziehungsweise die geografischen Regionen sind dabei hierarchisch in mehreren Hierarchiestufen geordnet und entsprechend einer Baumstruktur so abgelegt, dass unmittelbar nach einer übergeordneten Region alle zu dieser Region gehörigen untergeordneten Regionen folgen. Die Hierarchiestufen sind dabei in der dritten Spalte angegeben. Diese Hierarchiestufen entsprechen insbesondere der jeweils geltenden politischen Verwaltungsstruktur des jeweiligen Staates. Wie aus Fig. 3 hervorgeht, hat der Staat alleine (in diesem Falle "Deutschland") die höchste Hierarchiestufe "1". In der zweiten Hierarchiestufe "2" sind die Bundesländer angegeben, in der dritten Hierarchiestufe "3" die weiteren untergeordneten Regionen, in der Hierarchiestufe "4" die Städte und so weiter. Nach dem Datenbankeintrag "Deutschland" folgen also alle Regionen, die zu der Region "Deutschtand" gehören. Unmittelbar nach dem Dateneintrag "Bayern" folgen alle Regionen, die zu "Bayern" gehören, und so weiter. Innerhalb derselben Hierarchiestufe beziehungsweise Hierarchieebene können die jeweiligen Regionen optional alphabetisch geordnet sein.

Optional können die Datenbankeinträge 18 in der ersten Datenbank 16 auch komprimiert abgelegt sein, insbesondere delta-komprimiert.

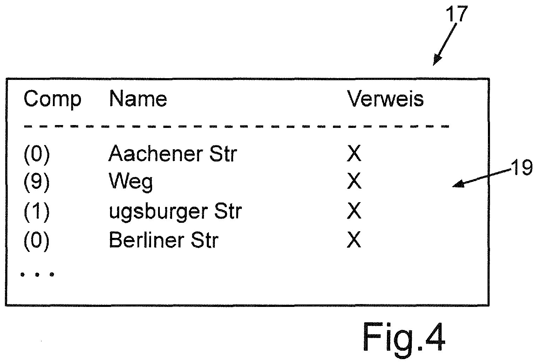

Die Komprimierung erweist sich jedoch insbesondere bei der zweiten Datenbank 17 als besonders vorteilhaft, deren Aufbau in Fig. 4 schematisch dargestellt ist. In der zweiten Datenbank 17 sind Datenbankeinträge 19 abgelegt, welche Straßennamen und/oder Sonderziele (sogenannte "Points of Interest") angeben. Diese Straßennamen und/oder Sonderziele sind dabei delta-komprimiert, so dass zu jedem Datenbankeintrag 19 in der ersten Spalte "Comp" die Anzahl von Anfangsbuchstaben angegeben ist, welche von dem jeweils unmittelbar vorhergehenden Datenbankeintrag 19 übernommen werden sollen. Im Ausführungsbeispiel gemäß Fig. 4 ist als erster Datenbankeintrag 19 die "Aachener Straße" abgelegt. Es werden keine Buchstaben von einem vorherigen Eintrag übernommen. Bei dem zweiten Datenbankeintrag 19 werden neun Buchstaben von dem vorherigen Datenbankeintrag 19 übernommen, das heißt der Anfangsteil "Aachener". Der zweite Datenbankeintrag 19 lautet folglich "Aachener Weg". Bei dem dritten Datenbankeintrag 19 wird lediglich der erste Buchstabe "A" übernommen, so dass bei dem dritten Datenbankeintrag 19 die "Augsburger Straße" angegeben ist. In der zweiten Datenbank 17 sind die Datenbankeinträge 19 vorzugsweise alphabetisch abgelegt.

Die Datenbankeinträge der zweiten Datenbank können zusätzlich jeweils eine Referenz auf die genannte Navigationskarte beinhalten, um dann die gefundenen Ziele letztendlich geographisch orten zu können. Alternativ können die Datenbankeinträge der zweiten Datenbank auch aus der Navigationskarte referenziert werden, sofern das Datenformat der Navigationskarte dies zulässt bzw. vorsieht.

Mit erneutem Bezug auf Fig. 2 können die erste Datenbank 16 und/oder die zweite Datenbank 17 in mehrere Teildatenbanken 20 beziehungsweise 21 gegliedert sein. Die Teildatenbanken 20, 21 beinhalten dann lediglich eine Untermenge der jeweiligen Datenbankeinträge 18 beziehungsweise 19. Jede Teildatenbank 20, 21 kann dabei in Form einer separaten Datei bereitgestellt sein, welche in dem Speicher 15 abgelegt ist. Die Unterteilung in mehrere Teildatenbanken 20, 21 kann beispielsweise derart vorgenommen werden, dass größere Gebiete - wie beispielsweise die USA oder Europa - in mehrere kleinere Regionen - zum Beispiel in Staaten oder Bundesländer - aufgeteilt werden und zu jedem Teilgebiet jeweils eine separate Teildatenbank 20, 21 bereitgestellt wird. Beim Durchführen der Suche kann die Recheneinrichtung 12 dann eine oder mehrere der Teildatenbanken 20, 21 aus dem Speicher 15 in einen flüchtigen Arbeitsspeicher kopieren beziehungsweise laden und dann nach den passenden Datenbankeinträgen suchen. Dies reduziert die Rechenzeit auf ein Minimum.

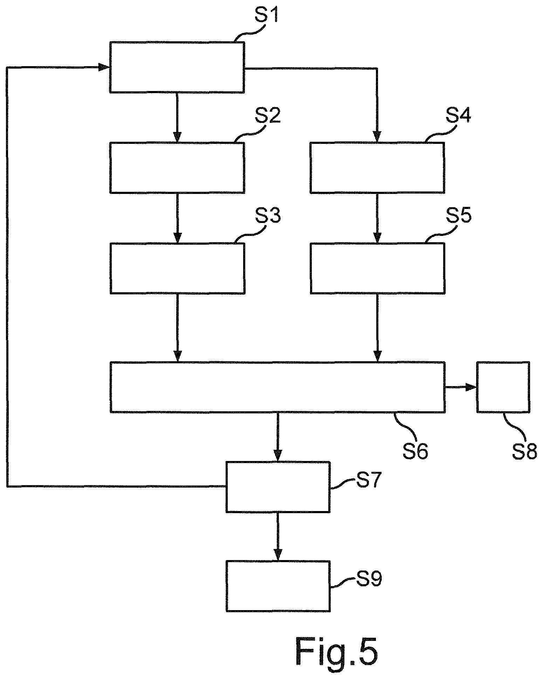

Bezug nehmend nun auf Fig. 5 wird nachfolgend ein Verfahren gemäß einer Ausführungsform der Erfindung näher erläutert:
In einem ersten Schritt S1 empfängt die Recheneinrichtung 12 eine Sucheingabe, welche der Benutzer an der Eingabeeinrichtung 10 vornimmt. Es kann sich hier zunächst um eine Teileingabe handeln, welche beispielsweise nur einen Suchbegriff beinhaltet. In einem weiteren Schritt S2 durchsucht die Recheneinrichtung 12 die erste Datenbank 16 - oder zumindest eine der Teildatenbanken 20 - nach passenden Datenbankeinträgen 18 abhängig von der empfangenen Sucheingabe. Die gefundenen Datenbankeinträge 18 werden in einer ersten Ergebnisliste gemäß Schritt S3 zusammengefasst.

Unabhängig davon - gleichzeitig oder im Anschluss - durchsucht die Recheneinrichtung 12 abhängig von derselben Sucheingabe auch die zweite Datenbank 17 nach passenden Datenbankeinträgen 19. Die Suche nach passenden Straßennamen und/oder Sonderzielen erfolgt gemäß Schritt S4. Gemäß Schritt S5 werden die gefundenen Datenbankeinträge 19 aus der zweiten Datenbank 17 in einer zweiten Ergebnisliste zusammengefasst.

In einem weiteren Schritt S6 überprüft die Recheneinrichtung 12 die Verweise der gefundenen Datenbankeinträge 19 in der zweiten Ergebnisliste. Zeigt ein Verweis auf die "ID" einer gefundenen Region aus der ersten Ergebnisliste, so werden diese beiden Datenbankeinträge 18, 19 zu einem Eintragspaar zusammengefasst und als mögliches Ziel gemäß Schritt S7 in eine Auswahlliste aufgenommen. Diejenigen Datenbankeinträge 18, 19, welche keine Zuordnung erfahren, werden gemäß Schritt S8 verworfen. Die Auswahlliste wird dann gemäß Schritt S9 auf der Anzeigeeinrichtung 8 angezeigt.

Wie in Fig. 5 angedeutet, wird das Verfahren wiederholt durchgeführt, während der Benutzer seine Sucheingabe vervollständigt. Das Verfahren wird beispielsweise nach jedem neuen Zeichen der Sucheingabe oder aber nach jedem neuen Suchbegriff durchgeführt und die Auswahlliste entsprechend der jeweils vollständigeren Sucheingabe aktualisiert. Eine separate Bestätigung der Sucheingabe durch den Benutzer ist dabei nicht erforderlich, kann am Ende der Sucheingabe jedoch optional vorgenommen werden.

Die Suchzeit ist insgesamt minimal, weil die beiden Datenbanken 16, 17 mittels einer linearen Suche mit einer so genannten "Skip"-Funktion durchsucht werden, bei welcher Teile der Liste übersprungen werden können. Für die Reduktion der Suchzeit sorgt außerdem die spezielle Reihenfolge der jeweiligen Datenbankeinträge 18, 19, mit welcher diese Datenbankeinträge 18, 19 in der jeweiligen Datenbank 16, 17 abgelegt sind.

Wird als Sucheingabe beispielsweise "München Hanau" eingegeben, so führt die Suche in der ersten Datenbank 16 zur folgenden ersten Ergebnisliste:
- München
- Hanau

Die Suche in der zweiten Datenbank 17 führt wiederum zu einer zweiten Ergebnisliste, nämlich:
- Münchener Straße
- Hanauer Straße

Die Recheneinrichtung 12 stellt dann fest, dass bei der Hanauer Straße ein Verweis auf die Region "München" angegeben ist, jedoch der Datenbankeintrag "Münchener Straße" keinen Verweis auf die Region "Hanau" beinhaltet. Folglich ist lediglich eine einzige Kombination möglich, nämlich: "Hanauer Straße in München". Dieses mögliche Ziel wird dann in der Auswahlliste ausgegeben.

Gemäß einem weiteren Beispiel führt die Sucheingabe "Ham Str Munch" am Standort München zu folgender Auswahlliste:
- Hamburger Straße in München
- Hammersbacher Straße in München
- Münchener Straße in Hammelburg
- Edvard-Munch-Straße in Hamburg

Wird beim Durchsuchen der ersten Datenbank 16 eine bestimmte Region gefunden, so können in die erste Ergebnisliste gemäß Schritt S3 (vergleiche Fig. 5) zusätzlich auch alle dieser Region untergeordneten Regionen aufgenommen werden. Der in der zweiten Datenbank 17 angegebene Verweis zeigt nämlich auf die kleinste Region, so dass insgesamt eine präzise Zuordnung der Datenbankeinträge 18, 19 zueinander möglich ist.

Die möglichen Ziele können in der ausgegebenen Auswahlliste auch priorisiert und dementsprechend in einer speziell definierten Reihenfolge ausgegeben werden. Die Recheneinrichtung 12 kann jedem möglichen Ziel der Auswahlliste jeweils einen Prioritätswert zuordnen, welcher abhängig von zumindest einem der folgenden Parameter ist:
- einer Häufigkeit, mit welcher das jeweilige Ziel bislang zur Berechnung der Navigationsroute ausgewählt wurde, und/oder
- einer aktuellen geografischen Position des Kraftfahrzeugs 1 und/oder
- einer Entfernung des jeweiligen Ziels von der aktuellen Position des Kraftfahrzeugs 1 und/oder
- einem Übereinstimmungsgrad des jeweiligen Ziels mit der Sucheingabe und/oder
- einem Verwaltungstyp des jeweiligen Ziels und/oder
- einer Einwohneranzahl des jeweiligen Ziels, falls als Ziel eine Stadt gefunden wird.

Im Ausführungsbeispiel kann dem Benutzer auch die Möglichkeit gegeben werden, die angezeigten möglichen Ziele einzeln in eine Favoritenliste aufzunehmen. Bei einer nachfolgenden späteren Suche können dann diejenigen Ziele an vorderster Stelle platziert werden, welche in der Favoritenliste enthalten sind. Wird ein gefundenes Ziel durch den Benutzer ausgewählt, so kann auch vorgesehen sein, dass dieses Ziel beispielsweise automatisch in die Favoritenliste aufgenommen wird. Es kann auch die Beziehung gelten, dass je öfter ein Ziel ausgewählt wird, desto höher sein Prioritätswert bzw. seine Gewichtung für die Favorisierung ist.

## Patentansprüche

1. Verfahren zum Betreiben eines Navigationssystems (11) eines Kraftfahrzeugs (1) für eine Suche nach möglichen Zielen, wobei mittels einer Recheneinrichtung (12) des Navigationssystems (11):
- eine Sucheingabe empfangen wird (S1), die ein Benutzer an einer Eingabeeinrichtung (10) vornimmt,
- eine erste Datenbank (16) in Abhängigkeit von der Sucheingabe nach passenden Datenbankeinträgen (18) durchsucht (S2) und hierbei eine erste Ergebnisliste von passenden Datenbankeinträgen (18) bereitgestellt (S3) wird, wobei in der ersten Datenbank (16) Datenbankeinträge (18) gespeichert sind, die geographische Regionen angeben,
- eine zweite Datenbank (17) in Abhängigkeit von derselben Sucheingabe nach passenden Datenbankeinträgen (19) durchsucht (S4) und hierbei eine zweite Ergebnisliste von passenden Datenbankeinträgen (19) bereitgestellt (S5) wird, wobei in der zweiten Datenbank (17) Datenbankeinträge (19) gespeichert sind, die Straßennamen und/oder Sonderziele angeben, und wobei in der zweiten Datenbank (17) zu jedem Straßennamen und/oder Sonderziel ein Verweis auf zumindest eine geographische Region angegeben ist,
- die Datenbankeinträge (19) aus der zweiten Ergebnisliste jeweils zu demjenigen Datenbankeintrag (18) aus der ersten Ergebnisliste zugeordnet (S6) werden, auf den der jeweilige Verweis zeigt, sodass Eintragspaare bestimmt (S7) werden, die jeweils einen Datenbankeintrag (18) aus der ersten Ergebnisliste und einen Datenbankeintrag (19) aus der zweiten Ergebnisliste beinhalten, und
- eine Anzeigeeinrichtung (8) zum Anzeigen einer die Eintragspaare als die möglichen Ziele umfassenden Auswahlliste angesteuert (S9) wird.

2. Verfahren nach Anspruch 1,
**dadurch gekennzeichnet, dass**
in der zweiten Datenbank (17) die Datenbankeinträge (19) alphabetisch abgelegt sind.

3. Verfahren nach Anspruch 1 oder 2,
**dadurch gekennzeichnet, dass**
die in der ersten Datenbank (16) angegebenen geographischen Regionen hierarchisch in zumindest zwei Hierarchiestufen geordnet sind, sodass zu jeder Region einer bestimmten Hierarchiestufe eine Mehrzahl von zu dieser Region geographisch gehörigen Regionen einer dazu untergeordneten Hierarchiestufe zugeordnet sind.

4. Verfahren nach Anspruch 3,
**dadurch gekennzeichnet, dass**
die in der ersten Datenbank (16) angegebenen geographischen Regionen entsprechend einer Baumstruktur in einer solchen Reihenfolge abgelegt sind, dass unmittelbar nach einer bestimmten Region jeweils alle zu dieser Region gehörigen untergeordneten Regionen folgen.

5. Verfahren nach Anspruch 3 oder 4,
**dadurch gekennzeichnet, dass**
- falls abhängig von der Sucheingabe eine Region aus einer bestimmten Hierarchiestufe gefunden wird, in die erste Ergebnisliste zusätzlich alle dieser Region untergeordneten Regionen aufgenommen werden, und/oder
- falls abhängig von der Sucheingabe eine bestimmte Region sowie eine dazu untergeordnete Region gefunden werden, in die erste Ergebnisliste ausschließlich die untergeordnete Region aufgenommen wird.

6. Verfahren nach einem der vorhergehenden Ansprüche,
**dadurch gekennzeichnet, dass**
die erste und/oder die zweite Datenbank (16, 17) komprimiert, insbesondere delta-komprimiert, abgelegt ist.

7. Verfahren nach einem der vorhergehenden Ansprüche,
**dadurch gekennzeichnet, dass**
die erste und/oder die zweite Datenbank (16, 17) eine Mehrzahl von Teildatenbanken (20, 21) umfasst, in denen jeweils eine Untermenge der Datenbankeinträge (18, 19) abgelegt ist.

8. Verfahren nach Anspruch 7,
**dadurch gekennzeichnet, dass**
während der Suche nach den möglichen Zielen mittels der Recheneinrichtung (12) zumindest eine der Teildatenbanken (20, 21) aus einem nicht-flüchtigen Speicher (15), in welchem die erste und die zweite Datenbank (16, 17) abgelegt sind, in einen flüchtigen Arbeitsspeicher geladen wird und nach den passenden Datenbankeinträgen (18, 19) in der Teildatenbank (20, 21) des Arbeitsspeichers durchsucht wird.

9. Verfahren nach einem der vorhergehenden Ansprüche,
**dadurch gekennzeichnet, dass**
das Durchsuchen der ersten und/oder der zweiten Datenbank (16, 17) mittels einer linearen Suche, insbesondere mit einer Skip-Funktion, erfolgt.

10. Verfahren nach einem der vorhergehenden Ansprüche,
**dadurch gekennzeichnet, dass**
bereits während der Sucheingabe, wenn in einem Eingabefeld von dem Benutzer die Sucheingabe fortlaufend ediert wird, wiederholt jeweils eine bislang vorgenommene Teileingabe durch die Recheneinrichtung (12) empfangen und die Auswahlliste abhängig von der jeweils aktuellen Teileingabe fortlaufend aktualisiert wird.

11. Verfahren nach Anspruch 10,
**dadurch gekennzeichnet, dass**
nach jedem neuen Zeichen oder nach jedem neuen Suchbegriff der Sucheingabe die Auswahlliste abhängig von der jeweils aktuellen Teileingabe aktualisiert wird.

12. Verfahren nach einem der vorhergehenden Ansprüche,
**dadurch gekennzeichnet, dass**
den möglichen Zielen jeweils ein Prioritätswert zugeordnet wird und eine Reihenfolge der möglichen Ziele in der Auswahlliste in Abhängigkeit von den Prioritätswerten bestimmt wird.

13. Verfahren nach Anspruch 12,
**dadurch gekennzeichnet, dass**
die Prioritätswerte in Abhängigkeit von zumindest einem der folgenden Parameter bestimmt werden:
- einer Häufigkeit, mit welcher das jeweilige Ziel bislang zur Berechnung einer Navigationsroute ausgewählt wurde, und/oder
- einer aktuellen Position des Kraftfahrzeugs (1) und/oder
- einer Entfernung des jeweiligen Ziels von der aktuellen Position des Kraftfahrzeugs (1) und/oder
- einem Übereinstimmungsgrad des jeweiligen Ziels mit der Sucheingabe und/oder
- einem Typ, insbesondere einem Verwaltungstyp, des jeweiligen Ziels und/oder
- einer Einwohneranzahl des jeweiligen Ziels, falls als Ziel eine Stadt gefunden wird.

14. Navigationssystem (11) für ein Kraftfahrzeug (1), wobei das Navigationssystem (11) dazu ausgelegt ist, ein Verfahren nach einem der vorhergehenden Ansprüche durchzuführen.

15. Kraftfahrzeug (1) mit einem Navigationssystem (11) nach Anspruch 14.

## Claims

1. A method for operating a navigation system (11) of a motor vehicle (1) for a search for possible destinations, wherein, by means of a computing device (12) of the navigation system (11):
- a search input that was performed by a user at an input device (10) is received (S1),
- a first database (16) is searched (S2) for matching database entries (18) depending on the search input and in doing so a first results list of matching database entries (18) is provided (S3), wherein database entries (18) that specify geographical regions are stored in the first database (16),
- a second database (17) is searched (S4) for matching database entries (19) depending on the same search input and in doing so a second results list of matching database entries (19) is provided (S5), wherein database entries (19) that specify road names and/or points of interest are stored in the second database (17), and wherein a reference to at least one geographical region is specified for each road name and/or point of interest in the second database (17),
- the database entries (19) from the second results list are each paired (S6) with the database entry (18) from the first results list to which the particular reference refers, such that entry pairs each containing a database entry (18) from the first results list and a database entry (19) from the second results list are determined (S7), and
- a display device (8) is controlled to display a selection list comprising the entry pairs as the possible destinations.

2. A method according to claim 1,
**characterised in that**
the database entries (19) are stored alphabetically in the second database (17).

3. A method according to claim 1 or 2,
**characterised in that**
the geographical regions specified in the first database (16) are ordered hierarchically in at least two hierarchy levels, so that, for each region of a specific hierarchy level, a plurality of regions belonging geographically to said region are allocated to a hierarchy level subordinated thereto.

4. A method according to claim 3,
**characterised in that**
the geographical regions specified in the first database (16) are stored in accordance with a tree structure in a sequence such that a specific region is immediately followed by all subordinate regions belonging to said specific region.

5. A method according to claim 3 or 4,
**characterised in that**
- if a region from a specific hierarchy level is found depending on the search input, all regions subordinated to said region are additionally included in the first results list, and/or
- if a specific region and a region subordinated thereto are found depending on the received search input, only the subordinated region is included in the first results list.

6. A method according to any one of the preceding claims,
**characterised in that**
the first and/or the second database (16, 17) are/is stored compressed, more especially delta-compressed.

7. A method according to any one of the preceding claims,
**characterised in that**
the first and/or the second database (16, 17) comprise/comprises a plurality of subdatabases (20, 21), in each of which a subset of the database entries (18, 19) is stored.

8. A method according to claim 7,
**characterised in that**
during the search for the possible destinations by means of the computing device (12), at least one of the subdatabases (20, 21) from a non-volatile memory (15) in which the first and the second database (16, 17) are stored is loaded into a volatile main memory and is searched for the matching database entries (18, 19) in the subdatabase (20, 21) of the main memory.

9. A method according to any one of the preceding claims,
**characterised in that**
the first and/or the second database (16, 17) is searched by means of a linear search, more especially with a skip function.

10. A method according to any one of the preceding claims,
**characterised in that**
if the search input is continuously edited in an input field by the user, each previously performed partial input is repeatedly received by the computing device (12) already during the search input, and the selection list is continuously updated depending on the current partial input.

11. A method according to claim 10,
**characterised in that**
the selection list is updated after each new character or after each new search term of the search input depending on the current partial input.

12. A method according to any one of the preceding claims,
**characterised in that**
the possible destinations are each assigned a priority value, and a sequence of the possible destinations in the selection list is determined depending on the priority values.

13. A method according to claim 12,
**characterised in that**
the priority values are determined depending on at least one of the following parameters:
- the frequency with which a particular destination was previously selected for calculating a navigation route, and/or
- the current position of the motor vehicle (1) and/or
- the distance of a particular destination from the current position of the motor vehicle (1) and/or
- the degree of correspondence between a particular destination and the search input and/or
- the type, more especially the administrative type, of a particular destination and/or
- the number of inhabitants of a particular destination, if a town is the destination.

14. A navigation system (11) for a motor vehicle (1), wherein the navigation system (11) is designed to carry out a method according to any one of the preceding claims.

15. A motor vehicle (1) comprising a navigation system (11) according to claim 14.

## Revendications

1. Procédé de gestion d'un système de navigation (11) d'un véhicule (1) permettant de rechercher des destinations possibles, selon lequel, au moyen d'un dispositif de calcul (12) du système de navigation (11) :
- une saisie de recherche qu'un utilisateur a effectué sur un dispositif de saisie (10) est reçue (S1),
- une première banque de données (16) est consultée (S2) en fonction de la saisie de recherche concernant des inscriptions dans la banque de données appropriées (18), et une première liste d'inscriptions dans la banque de données (18) appropriées est ainsi fournie (S3), dans la première banque de données (16) étant enregistrées des inscriptions de banque de données (18) indiquant des régions géographiques,
- une seconde banque de données (17) est consultée (S4) en fonction de la même saisie de recherche, concernant des inscriptions dans la banque de données appropriées (19), et une seconde liste d'inscriptions dans la banque de données (19) appropriées est ainsi fournie (S5), dans la seconde banque de données (17) étant enregistrées des inscriptions de banque de données (19) indiquant des noms de rues et/ou des destinations particulières, et, dans la seconde banque de données (17), pour chaque nom de rue et/ou chaque destination particulière étant indiquée une référence à au moins une région géographique,
- les inscriptions de banque de données (19) provenant de la seconde liste de résultats étant respectivement associées (S6) aux inscriptions de banque de données (18) provenant de la première liste de résultats, montrées par la référence respective, de façon à déterminer (S7) des paires d'inscriptions renfermant chacune une inscription de banque de données (18) provenant de la première liste de résultats et une inscription de banque de données (19) provenant de la seconde liste de résultats, et
- un dispositif d'affichage (8) étant commandé (S9) pour afficher une liste de sélection comprenant les paires d'inscriptions en tant que destinations possibles.

2. Procédé conforme à la revendication 1,
**caractérisé en ce que**
dans la seconde banque de données (17) les inscriptions de banque de données (19) sont déposées par ordre alphabétique.

3. Procédé conforme à la revendication 1 ou 2,
**caractérisé en ce que**
les régions géographiques indiquées dans la première banque de données (16) sont classées hiérarchiquement selon au moins deux échelons hiérarchiques de sorte qu'à chaque région d'un échelon hiérarchique déterminé soit associé un ensemble de régions appartenant à cette région géographique d'un échelon hiérarchique inférieur.

4. Procédé conforme à la revendication 3,
**caractérisé en ce que**
les régions géographiques indiquées dans la première banque de données (16) sont déposées selon une structure arborescente avec une succession telle que, directement après une région déterminée suivent toutes les régions d'échelon inférieur appartenant à cette région.

5. Procédé conforme à la revendication 3 ou 4,
**caractérisé en ce que**
- lorsque, en fonction de la saisie de recherche est trouvée une région ayant un échelon hiérarchique déterminé, dans la première liste de résultats sont en outre intégrées toutes les régions subordonnées à cette région, et/ou
- lorsque, en fonction de la saisie de la recherche sont trouvées une région déterminée et une région subordonnée à celle-ci, dans la première liste de résultats, seule est intégrée la région subordonnée.

6. Procédé conforme à l'une des revendications précédentes,
**caractérisé en ce que**
la première banque de données et/ou la seconde banque de données (16, 17) est(sont) déposée(s) avec compression, en particulier compression delta.

7. Procédé conforme à l'une des revendications précédentes,
**caractérisé en ce que**
la première banque de données et/ou la seconde banque de données (16, 17) comporte(nt) un ensemble de banques de données partielles (20, 21) dans lequel est respectivement déposé un sous-ensemble d'inscriptions de banque de données (18, 19).

8. Procédé conforme à la revendication 7,
**caractérisé en ce que**
pendant la recherche des destinations possibles, au moyen du dispositif de calcul (12) au moins l'une des banques de données partielle (20, 21) est chargée dans une mémoire de travail volatile à partir d'une mémoire non volatile (15) dans laquelle sont déposées la première banque de données et la seconde banque de données (16, 17) et une recherche est effectuée dans la banque de données partielle (20, 21) de la mémoire de travail concernant les inscriptions dans la banque de données appropriées (18, 19).

9. Procédé conforme à l'une des revendications précédentes,
**caractérisé en ce que**
la recherche dans la première banque de données et/ou dans la seconde banque de données (16, 17) est effectuée par une recherche linéaire, en particulier avec une fonction de saut.

10. Procédé conforme à l'une des revendications précédentes,
**caractérisé en ce que**
déjà pendant la saisie de la recherche, lorsque, la saisie de la recherche est éditée en continu par l'utilisateur, dans un champ de saisie, une saisie partielle effectuée jusqu'alors est de manière répétitive respectivement reçue par l'unité de calcul (12) et la liste de sélection est actualisée en continu en fonction de la saisie partielle actuelle respective.

11. Procédé conforme à la revendication 10,
**caractérisé en ce qu'**
après chaque nouveau caractère ou après chaque nouveau terme de recherche de la saisie de recherche, la liste de sélection est actualisée en fonction de la saisie partielle actuelle respective.

12. Procédé conforme à l'une des revendications précédentes,
**caractérisé en ce qu'**
aux destinations possibles est respectivement associée une valeur de priorité, et une succession de destinations possibles est déterminée dans la liste de sélection en fonction des valeurs de priorité.

13. Procédé conforme à la revendication 12,
**caractérisé en ce que**
les valeurs de priorité sont déterminées en fonction d'au moins l'un des paramètres suivants :
- la fréquence avec laquelle la destination respective a été jusqu'alors choisie pour calculer une route de navigation, et/ou
- la position actuelle du véhicule (1), et/ou
- la distance de la destination respective de la position actuelle du véhicule (1), et/ou
- le degré de concordance de la destination respective avec la saisie de la recherche, et/ou
- le type, en particulier le type administratif de la destination respective, et/ou
- le nombre d'habitants de la destination respective lorsqu'en tant que destination une ville a été trouvée.

14. Système de navigation (11) destiné à un véhicule (1), ce système de navigation (11) étant réalisé pour permettre la mise en oeuvre d'un procédé conforme à l'une des revendications précédentes.

15. Véhicule (1) équipé d'un système de navigation (11) conforme à la revendication 14.
